(19) Europäisches Patentamt
European Patent Office
Office européen des brevets

(11) EP 0 858 564 B1

(12) **EUROPÄISCHE PATENTSCHRIFT**

(45) Veröffentlichungstag und Bekanntmachung des Hinweises auf die Patenterteilung:
**07.08.2002 Patentblatt 2002/32**

(21) Anmeldenummer: **97924926.5**

(22) Anmeldetag: **27.05.1997**

(51) Int Cl.[7]: **F16H 61/38**, G01P 3/56

(86) Internationale Anmeldenummer:
**PCT/DE97/01104**

(87) Internationale Veröffentlichungsnummer:
**WO 98/12457 (26.03.1998 Gazette 1998/12)**

(54) **VORRICHTUNG UND VERFAHREN ZUM BETRIEB EINES UMSCHLINGUNGSGETRIEBES**

METHOD AND DEVICE FOR THE OPERATION OF A FLEXIBLE DRIVE MECHANISM

DISPOSITIF DE TRANSMISSION A VARIATION CONTINUE ET SON FONCTIONNEMENT

(84) Benannte Vertragsstaaten:
**DE FR IT NL**

(30) Priorität: **19.09.1996 DE 19638277**

(43) Veröffentlichungstag der Anmeldung:
**19.08.1998 Patentblatt 1998/34**

(73) Patentinhaber: **ROBERT BOSCH GMBH**
**70442 Stuttgart (DE)**

(72) Erfinder: **BOLZ, Martin-Peter**
**D-71720 Oberstenfeld (DE)**

(56) Entgegenhaltungen:
**DE-A- 2 755 424**
**DE-A- 4 411 628**
**DE-C- 4 440 278**
**NL-A- 8 103 554**
**US-A- 5 383 014**

- **PATENT ABSTRACTS OF JAPAN vol. 012, no. 182 (M-702), 27.Mai 1988 & JP 62 292950 A (DAIHATSU MOTOR), 19.Dezember 1987,**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Stand der Technik

Die Erfindung betrifft eine Vorrichtung bzw. ein Verfahren zum Betrieb eines Umschlingungsgetriebes mit den Merkmalen des Oberbegriffs der unabhängigen Ansprüche.

Stufenlos in der Übersetzung veränderbare Getriebe sind in verschiedenen Variationen bekannt. Hierbei sind insbesondere die sogenannten Umschlingungsgetriebe zu erwähnen, bei denen zwischen einer mit dem Fahrzeug verbundenen Antriebsseite und einer mit den Fahrzeugrädern verbundenen Abtriebsseite ein Band, vorzugsweise ein Schubgliederband, oder ein Riemen oder eine Kette, vorzugsweise eine Zugkette, angeordnet ist. Die An- bzw. Abtriebseite weist dabei im allgemeinen je eine axial verschiebbare Kegelscheibe auf. Solche Systeme sind beispielsweise aus der EP,A1,0 451 887 oder der DE-OS 44 11 628 bekannt. Der Wirkungsgrad solcher Getriebe hängt maßgeblich davon ab, daß die Anpreßkraft der Scheiben gegen das Umschlingungselement so dimensioniert sein muß, daß sicher kein Schlupf zwischen den Scheiben und dem Umschlingungselement auftritt. Diese Anpreßkraft kann, mit einem gewissen Sicherheitszuschlag, nach dem größten zu übertragenden Moment dimensioniert sein. Dies erzeugt jedoch im Normalbetrieb des Fahrzeugs, also bei geringeren Übertragungsmomenten, zu hohe Reibkräfte und hydraulische Verluste im Getriebe.

Eine Möglichkeit, diese Situation zu verbessern, besteht darin, daß die Anpreßkraft dem momentanen Übertragungsmoment anzupassen. Die eingangs erwähnte EP,A1,0 451 887 steuert daher die Anpreßkraft abhängig von dem Motormoment. Eine weitere Möglichkeit besteht darin, die Anpreßkraft auf einen Wert zu reduzieren, der gerade ausreicht, um ein Durchrutschen bei dem aktuellen Übertragungsmoment sicher zu verhindern. Eine Schlupfregelung ist beispielsweise der eingangs erwähnten DE-OS 44 11 628 zu entnehmen. Zu solch einer Schlupfregelung ist die möglichst genaue Kenntnis des momenten Schlupfes notwendig. In der DE-OS 44 11 628 wird hierzu unter anderem vorgeschlagen, die Geschwindigkeit des Umschlingungselements zu erfassen.

Die gattungsgemäße DE 44 40 278 C1 zeigt eine Ermittlung zur Bestimmung der Umlaufgeschwindigkeit des Übertragungsmittels in den Kegelscheibensätzen eines stufenlosen Getriebes durch eine Detektion der einzelnen Glieder des Übertragungsmittels.

Die DE 27 55 424 A1 zeigt die Ermittlung Getriebeschlupfs bei einem stufenlosen Getriebe dadurch, dass Markierungen auf dem Übertragungsmittels durch zwei Sensoren erfasst werden.

Die Aufgabe der vorliegenden Erfindung besteht in einer einfachen und genauen Erfassung des Schlupfes.

Diese Aufgabe wird durch die Merkmale der unabhängigen Ansprüche gelöst.

Vorteile der Erfindung

Wie erwähnt geht die Erfindung aus von einem in seiner Übersetzung verstellbaren Umschlingungsgetriebe mit einer Antriebsseite und einer Abtriebsseite. Die Umschlingungsmittel dienen zur Herstellung einer in ihrem Schlupfverhalten beeinflussbaren mechanischen Wirkverbindung zwischen der Antriebs- und Abtriebsseite, wobei Beeinflussungsmittel vorgesehen sind, mittels der der Schlupf der Umschlingungsmittel beeinflußt werden kann.

Der Kern der Erfindung besteht darin, daß wenigstens zwei Sensoreinheiten vorgesehen sind, die im Bereich der Umschlingungsmittel und zwischen der Antriebs- und einer Abtriebsseite angeordnet sind. Die Signale dieser Sensoreinheiten werden dann erfindungsgemäß den Beeinflussungsmitteln zur Beeinflussung des Schlupfes der Umschlingungsmittel zugeführt. Durch die erfindungsgemäß angeordneten Sensoreinheiten ist es in einfacher Weise möglich, den aktuellen Schlupf sehr genau zu erfassen und zur Schlupfbeeinflussung heranzuziehen.

Erfindungsgemäß sind die Umschlingungsmittel in einzelne Segmente untergliedert, die an den Sensoreinheiten zur Herstellung der mechanischen Wirkverbindung zwischen der Antriebs- und Abtriebsseite vorbeiführen. Die Sensoreinheiten sind dann derart angeordnet, daß deren Signale die an den Sensoreinheiten vorbeiführenden Segmente repräsentieren.

Die eine der Sensoreinheiten ist dabei derart angeordnet, daß deren Signal die zur Antriebs- oder Abtriebsseite hinführenden Segmente repräsentiert, während die andere der Sensoreinheiten derart angeordnet ist, daß deren Signal die zur Antriebs- oder Abtriebsseite wegführenden Segmente repräsentiert.

Dabei ist es besonders vorteilhaft, die Sensoreinheiten derart anzuordnen, daß die Sensoreinheiten die Veränderungen der relativen Lage zwischen den Umschlingungsmitteln und den Sensoreinheiten erfassen.

Wie schon eingangs erwähnt kann die Antriebsseite und/oder die Abtriebsseite wenigstens ein axial verschiebbares Element aufweisen, das im wesentlichen die Form einer Kegelscheibe besitzt. Als Umschlingungsmittel kann wenigstens ein Band, vorzugsweise ein Schubgliederband, oder ein Riemen oder eine Kette zwischen Scheibenpaaren, die die Antriebs- und die Abtriebsseite darstellen, eingespannt sein, wobei der Schlupf zwischen dem Umschlingungsmittel und den die Umschlingungsmittel einspannenden Scheibenpaaren beeinflußbar ist.

Die Beeinflussungsmittel sind vorteilhafterweise derart ausgestaltet, daß eine geometrische Übersetzung abhängig von der Differenz zwischen den beiden Sensorsignalen gebildet wird. Zur Ermittlung des aktuellen Schlupfes können erste und zweite Drehzahlerfassungsmittel zur Erfassung der Drehzahl der Antriebs- und/oder Abtriebsseite vorgesehen sein, wobei die Ausgangssignale dieser Drehzahlerfassungsmittel den Beeinflussungsmitteln zugeführt werden. Die Beeinflussungsmittel sind dann derart ausgestaltet, daß abhängig von den Ausgangssignalen dieser Drehzahlerfassungsmittel eine Drehzahlübersetzung ermittelt wird. Mittels eines Vergleichs zwischen der geometrischen Übersetzung und der Drehzahlübersetzung wird auf den aktuellen Schlupf der Umschlingungsmittel geschlossen wird.

Die Beeinflussungsmittel können derart ausgestaltet sein, daß der Schlupf auf einen vorgebbaren Wert geregelt wird, wobei zur Regelung des Schlupfes der aktuelle Schlupf mit einem vorgebbaren Sollwert verglichen wird.

Die Erfindung betrifft weiterhin ein Verfahren zum Betrieb eines in seiner Übersetzung verstellbaren Umschlingungsgetriebes mit einer Antriebsseite und einer Abtriebsseite und mit Umschlingungsmitteln zur Herstellung einer in ihrem Schlupfverhalten beeinflussbaren mechanischen Wirkverbindung zwischen der Antriebs- und Abtriebsseite. Der Kern des erfindungsgemäßen Verfahrens besteht darin, daß die zu der Antriebsseite oder Abtriebsseite hinführenden Teile der Umschlingungsmittel und die von der Antriebsseite oder Abtriebsseite wegführenden Teile der Umschlingungsmittel erfaßt werden und der Schlupf der Umschlingungsmittel abhängig von der erfaßten Teilen beeinflußt wird.

Weitere vorteilhafte Ausgestaltungen der Erfindung sind den Unteransprüchen und den im folgenden beschriebenen Ausführungsbeispielen zu entnehmen.

Zeichnung

Die Figur 1 zeigt ein Übersichtsblockschaltbild mit einer schematischen Darstellung des Getriebes, während die Figur 2 schematische die Lage der Sensoreinheiten darstellt. Die Figur 3 offenbart ein Ablaufdiagramm eines in der Figur 4 dargestellten Blockes. Die Figur 5a, 5b und 5c zeigt schematisch verschiedene Ausgestaltungen des Umschlingungslementes.

Ausführungsbeispiel

Die Erfindung soll im folgenden anhand der Ausführungsbeispiele detalliert beschrieben werden.

In der Figur 1 ist ein Aufbau eines Umschlingungsgetriebes im Schnitt dargestellt. Der Verbrennungsmotor 1 kann durch die Drosselklappe 2 in seinem abgegebenen Motormoment $M_m$ beeinflußt werden. Die Drosselklappe 2 ist z.B. mechanisch oder elektrisch mit dem Fahrpedal (nicht dargestellt) gekoppelt. Der Verbrennungsmotor 1 ist meist mittels einer Kupplung und/oder einem Wandler 3 an die Antriebs- (Primär-) Seite des CVT-Getriebes 4 angekoppelt. Die Abtriebs-(Sekundär-) Seite des CVT-Getriebes 4 ist über ein nachgeschaltetes Getriebe (nicht dargestellt) mit den Rädern des Fahrzeugs verbunden. Das CVT-Getriebe besitzt auf der Primär- und Sekundärseite je eine axial verschiebbare Kegelscheibe 5 und 6. Zur Verstellung der Übersetzung wird in den Ölkammern 7 und 8 ein entsprechender Primärdruck $P_p$ bzw. Sekundärdruck $P_s$ aufgebaut. Durch eine geeignete Wahl der Stellgrößen Primärdruck $P_p$ und Sekundärdruck $P_s$ muß gewährleistet werden, daß

1. die Getriebeübersetzung u dem gewünschten Verhältnis von Primärdrehzahl $N_p$ und Sekundärdrehzahl $N_s$ entspricht, und
2. das kraftübertragende Schubgliederband 9 (bzw. Kette, Band) ausreichend stark an die Scheiben angepreßt wird, um ein Durchrutschen des Schubgliederbandes 9 zu verhindern.

Der obengenannte Punkte 1 wird durch eine elektrohydraulische Übersetzungs- oder Primärdrehzahlregelung 10 realisiert. Für den Punkt 2 wird eine Bandspannungsregelung 11 eingesetzt.

In dem häufig eingesetzten und in der Figur 1 gezeichneten Master-Slave-Prinzip dient der Sekundärdruck $P_s$ zur Einstellung der Bandspannung und der Primärdruck $P_p$ zur Einstellung der Übersetzungs- bzw. Primärdrehzahl. Zur Bandspannungsregelung wird dem Block 11 neben der Primärdrehzahl $N_p$ und der Sekundärdrehzahl $N_S$ die Motordrehlzahl $N_m$ (Drehzahlsensor 12) und die Ausgangssignale $N_{in}$ und $N_{out}$ der noch zu beschreibenden Sensoreinheiten S1 und S2 zugeführt. Abhängig von diesen Signalen wird ein einzustellender Sekundärdruck $P_S$ ermittelt. Dies wird im folgenden genauer anhand der Figur 3 und 4 beschrieben werden.

Bei dem alternativ möglichen Partner-Prinzip beeinflußt die Bandspannungsregelung sowohl den Primär- als auch den Sekundärdruck.

Wie schon erwähnt wird in solchen CVT-Getrieben das Moment mit einem Umschlingungselement 9 zwischen den zwei in der Figur 1 gezeigten Pulleysätzen übertragen. Die Änderung der Getriebeübersetzung wird durch ein Verstellen der aktiven Radien der Pulleys erreicht. Die Pulleysätze sind aus je zwei Kegelstümpfen beziehungsweise Kegelscheiben aufgebaut, die gegeneinander verschoben werden können. Dies ist als Prinzipbild in der Figur 2 dargestellt. Hier ist ein Schnittbild senkrecht zu den Achsen der Kegelstümpfen beziehungsweise Kegelscheiben gezeigt, wobei mit dem Pfeil 2 die Drehrichtung im Normal-Vorwärtsbetrieb des Fahrzeugs angezeigt ist. Das Umschlingungselement 9 ist dabei in zwei Extremübersetzungseinstellungen $u_{min}$ und $u_{max}$ mit Strichen und Punkten eingezeichnet. Die motorseitige Primärseite ist mit Prim. und die den Fahrzeugrädern zugewandte Seite mit Sek. bezeichnet.

Durch das Verschieben der Kegelscheiben gegeneinander ändern sich die aktiven Radien für das Umschlingungselement, das in diesem Beispiel ein Schubgliederband 9 sein soll. Der Radius, an dem das Umschlingungselement 9 auf der Primärseite Prim. wirkt, das heißt an dem die Kraft übertragen wird, wird mit $r_p$ bezeichnet, der auf der Sekundärseite Sek. mit $r_s$. Diese Radien können als theoretische Größe ermittelt werden, selbst wenn das Umschlingungsband 9 nicht ideal auf den so ermittelten Kreissegmenten abläuft. Die Länge $L_r$ des Umschlingungsbandes 9 kann als konstant angenommen werden. Die Annahme, daß sich die Bahn des Umschlingungselements 9 aus zwei Kreissegmenten und zwei Geradenstücken zusammensetzt (siehe Figur 2), ist in weiten Betriebsbereichen richtig und kann ohne großen Fehler immer angenommen werden.

Wie in der Figur 2 zu sehen ist, haben die Achsen der Pulleys einen festen Abstand a. Für die erfindungsgemäße Idee werden in der Mitte zwischen den beiden Pulleys, also bei a/2, je eine Sensoreinheit S1 und S2 angeordnet. Diese Sensoren sind so beschaffen, daß sie einzelne Segmente 502 beziehungsweise Marken auf dem Umschlingungselement zählen können. Die Segmente beziehungsweise Marken sind mit exakt konstanten Abständen auf dem Umschlingungselement 9 angebracht. Hierauf wird noch detaillierter anhand der Figur 5 eingegangen.

Die erfindungsgemäße Idee basiert darauf, daß die Länge $L_p$ des Umschlingungselements 9 zwischen den Sensoren S1 und S2 auf der Primärseite Prim. (und natürlich auch auf der Sekundärseite Sek.) ein direktes Maß für die geometrische Übersetzung $u_{geo}$ ($=r_s/r_p$) ist. Dies soll anhand der folgenden Betrachtung der geometrischen Verhältnisse des Umschlingungsgetriebes verdeutlich werden.

Die Länge $L_r$ des Schubgliederbandes 9 ergibt sich zu:

Gleichung 1:

$$L_r = 2\sqrt{a^2 - (r_p - r_s)^2} + \pi(r_p + r_s) + 2\alpha(r_p - r_s)$$

Das geometrische Übersetzungsverhältnis $u_{geo}$ ist definiert als:

$$u: = u_{geo} = \frac{r_s}{r_p} \qquad (2),$$

wobei mit $r_s$ der momentan wirksame Sekundärradius und mit $r_p$ der momentan wirksame Primärradius bezeichnet ist. Der Winkel $\alpha$ zwischen dem Schubgliederband und der Verbindungslinie der Achsen beträgt (Achsabstand a):

Gleichung 3:

$$\alpha = \arcsin\left(\frac{r_p - r_s}{a}\right) = \arcsin\left(\frac{r_p(1 - u)}{a}\right)$$

Die Länge $L_p$ des Bandes 9 zwischen den Meßpunkten der Sensoreinheiten S1 und S2 ergibt sich zu:

$$L_p = L_{up} + 2*L_{ap} \qquad (4),$$

wobei mit $L_{up}$ die Umschlingungslänge des Primärpulleys und mit $L_{ap}$ der Weg zwischen dem Berührungspunkt am Primärpulley und den Sensoreinheiten S1 und S2 bezeichnet ist.

Damit ergibt sich für die die Umschlingungslänge $L_{up}$ des Primärpulleys und für den der Weg $L_{ap}$ zwischen dem Berührungspunkt am Primärpulley und den Sensoreinheiten S1 und S2:

$$L_{up} = \pi r_p + 2\alpha r_p = r_p\left(\pi + 2\arcsin\left(\frac{r_p(1-u)}{a}\right)\right) \quad (5)$$

$$L_{ap} = \frac{a}{2\cos\alpha} - r_p{*}\tan\alpha \quad (6)$$

Damit ist die Länge $L_p$ des Schubgliederbandes zwischen den Sensoreinheiten S1 und S2 eine Funktion, die nur von dem Primärradius $r_p$ abhängt:

$$L_p = r_p(\pi + 2\alpha - \tan\alpha) + \frac{a}{2\cos\alpha} \quad (7a)$$

$$L_p = r_p\left(\pi + 2\arcsin\left(\frac{r_p(1-u)}{a}\right) - \frac{\left(\frac{r_p(1-u)}{a}\right)}{\sqrt{1-\left(\frac{r_p(1-u)}{a}\right)^2}}\right) + \frac{a}{\sqrt{1-\left(\frac{r_p(1-u)}{a}\right)^2}} \quad (7b)$$

$$L_p = r_p\left(\pi + 2\left(\left(\frac{r_p(1-u)}{a}\right) + \frac{\left(\frac{r_p-(1-u)}{a}\right)^3}{6}\right) - \frac{\left(\frac{r_p(1-u)}{a}\right)}{\sqrt{1-\left(\frac{r_p(1-u)}{a}\right)^2}}\right) + \frac{a}{\sqrt{1-\left(\frac{r_p(1-u)}{a}\right)^2}} \quad (7c)$$

Für ein bekanntes Getriebe ist $r_p$ eine Funktion der geometrischen Übersetzung $u_{geo}=u$, in die nur die Getriebeparameter $L_r$ (Länge des Bandes) und a (Abstand der Achsen der Pulleys) eingehen.

$$r_p = a*\left(\sqrt{\frac{\pi^2}{4}*\left(\frac{u^2}{(1-u)^4}\right)+\frac{\frac{L_r}{a}-2}{(1-u)^2}}-\frac{\pi}{2}*\frac{u+1}{(u-1)^2}\right) \qquad (8)$$

Die Gleichung 8 in die Gleichung 7c eingesetzt führt zu einer Gleichung zur Bestimmung von $L_p$, die ausschließlich von der geometrischen Übersetzung $u_{geo}$=u und fest eingestellten Getriebeparametern abhängt. Wird diese Gleichung in einer Kennlinie abgelegt, so kann beispielsweise aus der Länge $L_p$ des auf der Primärseite gespeicherten Umschlingungselements 9 die geometrische Übersetzung $u_{geo}$ bestimmt werden.

Arbeitet das System ohne einen merklichen Schlupf zwischen Band und Pulleys, so muß die geometrische Übersetzung $u_{geo}$ gleich der Drehzahlübersetzung $u_N$=Np/Ns sein. $N_p$ und $N_s$ sind dabei die Drehzahlen der Primär- und Sekundärseite (Sensoren 13, 14). Sind diese beiden Übersetzungen nicht gleich, so arbeitet das System mit einem bestimmten Bandschlupf.

Im folgenden soll anhand der Figuren 3 und 4 ein konkretes Ausführungsbeispiel beschrieben werden.

Wie in der Figur 4 zu sehen ist, wird im Schlupfreglerblock 11 zunächst im Block 111 die Drehzahlübersetzung $u_N$ = Np/Ns ermittelt. Wesentlich für die Erfindung ist der Block 112, dem die Ausgangssignale $N_{in}$ und $N_{out}$ der Sensoren S1 und S2 zugeführt werden. Wie erwähnt sind diese Sensoren S1 und S2 so beschaffen, daß sie einzelne Segmente 502 beziehungsweise Marken auf dem Umschlingungselement zählen können. Die Segmente beziehungsweise Marken sind mit exakt konstanten Abständen auf dem Umschlingungselement 9 angebracht. Weist das Getriebe die in der Figur 2 mit dem Pfeil 2 gekennzeichnete Drehrichtung auf, so zählt die Sensoreinheit S1 die auf der Primärseite einlaufenden Bandsegmente $N_{in}$ beziehungsweise Bandmarkierungen und die Sensoreinheit S2 die von der Primärseite weglaufenden Bandsegmente $N_{out}$ beziehungsweise Bandmarkierungen.

Gemäß der Figur 3, die die Funktion des Blocks 112 (Fig.4) zeigt, wird nach dem Startschritt 301 im Schritt 302 die aktuelle Drehzahlübersetzung $u_N$ eingelesen.

In den jeweiligen Endlagen (bei der kleinsten und der größten Getriebeübersetzung) ist die Zahl der Segmente beziehungsweise Marken, die sich auf der Primärseite und auf der Sekundärseite befinden, bekannt. Bei Vorliegen dieser Betriebsbedingungen (bei der kleinsten und der größten Getriebeübersetzung $u_{min}$, $u_{max}$) kann die Messung einfach gestartet werden. Im Schritt 303 wird aus diesem Grund abgefragt, ob eine solche Betriebsbedingung mit $u_{min}$ oder $u_{max}$ vorliegt. Der Betriebszustand maximaler oder minimaler Übersetzung kann aber auch durch andere Paramter ermittelt werden, beispielsweise durch Einlesen des Primär- und/oder Sekundärdrucks.

Zumindest am Anfang der Messung muß einmal ein solcher Betriebszustand erreicht werden. Wird im Schritt 303 ein Betriebszustand maximaler oder minimaler Übersetzung festegestellt, so wird als Startwert $L_{start}$ für die Länge $L_p$ des Bandes 9 auf der Primärseite zwischen den Meßpunkten der Sensoreinheiten S1 und S2 der Startwert $L_{min}$ beziehungsweise $L_{max}$ gesetzt.

Im Schritt 305 werden dann die Ausgangssignale $N_{in}$ und $N_{out}$ der Sensoren S1 und S2 eingelesen, die die auf der Primärseite einlaufenden und auslaufenden Segmente angeben. Im Schritt 306 wird die aktuelle Länge $L_p$ des Bandes 9 auf der Primärseite zwischen den Meßpunkten der Sensoreinheiten S1 und S2 derart ermittelt, daß zu dem Startwert $L_{start}$ die Anzahl der einlaufenden Segmente addiert und die Anzahl der auslaufenden Segmente subtrahiert werden.

Im Schritt 307 wird aus dem Wert $L_p$ aus der oben hergeleiteten Kennlinie (Gleichung 7c und 8) die geometrische Übersetzung $u_{geo}$ ermittelt.

Wird nach einem ersten Startdurchlauf im Schritt 303 festgestellt, daß keine extreme Übersetzung $u_{min}$ oder $u_{max}$ eingestellt ist, so werden im Schritt 308 die Ausgangssignale $N_{in}$ und $N_{out}$ der Sensoren S1 und S2 eingelesen, die die auf der Primärseite einlaufenden und auslaufenden Segmente angeben. Im Schritt 309 wird die aktuelle Länge $L_p$ des Bandes 9 auf der Primärseite zwischen den Meßpunkten der Sensoreinheiten S1 und S2 derart ermittelt, daß zu dem vorhergehend ermittelten Wert $L_p$ die Anzahl der einlaufenden Segmente addiert und die Anzahl der auslaufenden Segmente subtrahiert werden. Mit dem schon beschriebenen Block 307 wird die geometrische Übersetzung ermittelt.

Aus der im Block 111 und 112 der Figur 4 ermittelten aktuellen Drehzahlübersetzung $u_N$ und aktuellen geometrischen Übersetzung $u_{geo}$ wird im Block 113 ein aktueller Wert $\lambda_{B,ist}$ für den Bandschlupf $\lambda_B$ berechnet (beispielsweise durch Differenzbildung). Dieser Wert $\lambda_{B,ist}$ wird dann im Block 114 mit einem entsprechenden Sollwert $\lambda_{B,soll}$ verglichen, woraufhin abhängig von diesem Vergleich die Bandspannung (beispielsweise durch Einstellung des Sekundärdrucks $p_s$ beim eingangs erwähnten Master-Slave-Prinzip) derart eingestellt wird, daß kein Schlupf vorliegt (Regler R, Block 1142).

Der Sollwert $\lambda_{B,soll}$ für den Bandschlupf wird, wie eingangs erwähnt, unter Berücksichtigung des Motormoments und der Motordrehzahl ermittelt.

In der Figur 5 werden einige Ausführungsformen der Bandsegmente beziehungsweise der Bandmarkierungen vorgestellt.

Ein Schubgliederband besteht bekannterweise aus einer Vielzahl von Segmenten 502, die durch einen Federstahlring 503 zusammengehalten werden. Die Figur 5a zeigt ein konventionelles Schubgliederband 9 mit einzelnen Segmenten 502, wobei ein einzelnen Segment 502 (ohne gestrichelte Ausführungsform) in der Figur 5b zu sehen ist.

Wie in der Figur 5a gezeigt, kann bei konventionellen Schubgliederbändern auf das Anbringen von auswertbaren Marken verzichtet werden, da die Segmente selbst schon durch die detektierbaren Lücken 501 mittels bekannter geeigneter magnetischer Sensoren S1 und S2 gezählt werden können. Darüber hinaus ist insbesondere an die Verwendung von an sich bekannten Wirbelstrom-Sensoren gedacht.

Eine weitere Möglichkeit für eine noch deutlichere Detektierung der Segmente 502 ist in der Figur 5c dargestellt. Hier wurde jedes zweite Segment 502 an der Band-Außenseite A um einige Millimeter verlängert (siehe auch gestrichelte Darstellung des Segmentes 502 in der Figur 5b). Eine solche Markierung ist noch einfacher zu detektieren als die Lücken auf der Innenseite des in der Figur 5a gezeigten konventionellen Bandes. Bei der in der Figur 5c dargestellten Ausführungsform müssen die Sensoreinheiten S1 und S2 selbstverständlich an der Außenseite des Bandes angeordnet sein.

## Patentansprüche

1. Vorrichtung zum Betrieb eines in seiner Übersetzung verstellbaren Umschlingungsgetriebes mit einer Antriebsseite (Prim.) und einer Abtriebsseite (Sek.) und mit in einzelne Segmente (502) untergliederte Umschlingungsmitteln (9) zur Herstellung einer in ihrem Schlupfverhalten beeinflussbaren mechanischen Wirkverbindung zwischen der Antriebs- und Abtriebsseite und Beeinflussungsmittel (11), mittels der der Schlupf ($\lambda_B$) der Umschlingungsmittel (9) beeinflußt wird, **dadurch gekennzeichnet, dass** wenigstens zwei Sensoreinheiten (S1, S2) vorgesehen sind, die im Bereich der Umschlingungsmittel (9) und zwischen der Antriebsund einer Abtriebsseite derart angeordnet sind, dass deren Signale ($N_{in}$, $N_{out}$) die an den Sensoreinheiten (S1, S2) vorbeiführenden Segmente repräsentieren, wobei die eine der Sensoreinheiten (S1 S2) derart angeordnet ist, dass deren Signal ($N_{in}$) die zur Antriebs- oder Abtriebsseite hinführenden Segmente (502) repräsentiert, und die andere der Sensoreinheiten (S1, S2) derart angeordnet ist, dass deren Signal ($N_{out}$) die zur Antriebs- oder Abtriebsseite wegführenden Segmente (502) repräsentiert, und die Signale ($N_{in}$, $N_{out}$) den Beeinflussungsmitteln (11) zur Beeinflussung des Schlupfes ($\lambda_B$) der Umschlingungsmittel (9) zugeführt werden.

2. Vorrichtung nach Anspruch 1, **dadurch gekennzeichnet, dass** die Sensoreinheiten (S1, S2) derart angeordnet sind, dass die Sensoreinheiten die Veränderungen der relativen Lage zwischen den Umschlingungsmitteln (9) und den Sensoreinheiten erfassen.

3. Vorrichtung nach Anspruch 1, **dadurch gekennzeichnet, dass** die Antriebsseite (Prim.) und/oder die Abtriebsseite (Sek.) wenigstens ein axial verschiebbares Element (5, 6) aufweist, das im wesentlichen die Form einer Kegelscheibe besitzt.

4. Vorrichtung nach Anspruch 1 oder 3, **dadurch gekennzeichnet, dass** als Umschlingungsmittel wenigstens ein Band, vorzugsweise ein Schubgliederband (9), oder ein Riemen oder eine Kette zwischen Scheibenpaaren, die die Antriebs- und die Abtriebsseite darstellen, eingespannt ist, wobei der Schlupf ($\lambda_B$) zwischen dem Umschlingungsmittel und den die Umschlingungsmittel einspannenden Scheibenpaaren beeinflußbar ist.

5. Vorrichtung nach Anspruch 1, **dadurch gekennzeichnet, dass** die Beeinflussungsmittel (11) derart ausgestaltet sind, dass eine geometrische Übersetzung ($u_{geo}$) abhängig von der Differenz ($N_{in}$-$N_{out}$) zwischen den beiden Sensorsignalen gebildet wird.

6. Vorrichtung nach Anspruch 5, **dadurch gekennzeichnet, dass** erste und zweite Drehzahlerfassungsmittel (13, 14) zur Erfassung der Drehzahl der Antriebs- und/oder Abtriebsseite vorgesehen sind und die Ausgangssignale ($N_p$, $N_s$) dieser Drehzahlerfassungsmittel den Beeinflussungsmitteln (11) zugeführt werden und die Beeinflussungsmittel (11) derart ausgestaltet sind, dass abhängig von den Ausgangssignalen ($N_p$, $N_s$) dieser Drehzahlerfassungsmittel eine Drehzahlübersetzung ($u_N$) ermittelt wird und mittels eines Vergleichs zwischen der geometrischen Übersetzung ($u_{geo}$) und der Drehzahlübersetzung ($u_N$) auf den aktuellen Schlupf ($\lambda_{B,ist}$) der Umschlingungsmittel (9) geschlossen wird.

7. Vorrichtung nach Anspruch 1 oder 6, **dadurch gekennzeichnet, dass** die Beeinflussungsmittel (11) derart ausgestaltet sind, dass der Schlupf ($\lambda_B$) auf einen vorgebbaren Wert ($\lambda_{soll}$) geregelt wird, wobei zur Regelung des Schlupfes der aktuelle Schlupf ($\lambda_{B,ist}$) mit einem vorgebbaren Sollwert ($\lambda_{B,soll}$) verglichen wird.

8. Verfahren zum Betrieb eines in seiner Übersetzung verstellbaren Umschlingungsgetriebes mit einer Antriebsseite (Prim.) und einer Abtriebsseite (Sek.) und mit Umschlingungsmitteln (9) zur Herstellung einer in ihrem Schlupfverhalten beeinflussbaren mechanischen Wirkverbindung zwischen der Antriebs- und Abtriebsseite, wobei der Schlupf ($\lambda_B$) der Umschlingungsmittel (9) beeinflußt wird, **dadurch gekennzeichnet, dass**

- die zu der Antriebsseite (Prim.) oder Abtriebsseite (Sek.) hinführenden Teile ($N_{in}$) der Umschlingungsmittel (9) und die von der Antriebsseite (Prim.) oder Abtriebsseite (Sek.) wegführenden Teile ($N_{out}$) der Umschlingungsmittel (9) erfaßt werden und
- der der Schlupf ($\lambda_B$) der Umschlingungsmittel (9) abhängig von den erfaßten Teilen ($N_{in}$, $N_{out}$) beeinflußt wird.

## Claims

1. Device for the operation of a wrap-around transmission of which the ratio can be adjusted, having a drive side (Prim.) and an output side (Sek.) and having wrap-around means (9) subdivided into individual segments (502) to provide a mechanical operative connection between the drive and output side of which the slip behaviour can be influenced, and influencing means (11) by means of which the slip ($\lambda_B$) of the wrap-around means (9) is influenced, **characterized in that** at least two sensor units (S1, S2) are provided, which are arranged in the region of the wrap-around means (9) and between the drive side and an output side, in such a way that their signals ($N_{in}$, $N_{out}$) represent the segment leading past the sensor units (S1, S2), one of the sensor units (S1, S2) being arranged in such a way that its signal ($N_{in}$) represents the segments (502) leading towards the drive or output side, and the other of the sensor units (S1, S2) being arranged in such a way that its signal ($N_{out}$) represents the segments (502) leading away from the drive or output side, and the signals ($N_{in}$, $N_{out}$) being supplied to the influencing means (11) in order to influence the slip ($\lambda_B$) of the wrap-around means (9).

2. Device according to Claim 1, **characterized in that** the sensor units (S1, S2) are arranged in such a way that the sensor units register the changes in the relative position between the wrap-around means (9) and the sensor units.

3. Device according to Claim 1, **characterized in that** the drive side (Prim.) and/or the output side (Sek.) has at least one axially displaceable element (5, 6) which has substantially the shape of a conical disk.

4. Device according to Claim 1 or 3, **characterized in that** as the wrap-around means, at least one belt, preferably a thrust-element belt (9) or a belt or a chain is tensioned between pairs of disks, which represent the drive and the output side, it being possible for the slip ($\lambda_B$) between the wrap-around means and the pairs of disks that tension the wrap-around means to be influenced.

5. Device according to Claim 1, **characterized in that** the influencing means (11) are configured in such a way that a geometric transmission ratio ($u_{geo}$) depending on the difference ($N_{in}$-$N_{out}$) between the two sensor signals is formed.

6. Device according to Claim 5, **characterized in that** first and second rotational speed registering means (13, 14) are provided to register the rotational speed of the drive and/or output side, and the output signals ($N_p$, $N_s$) from these rotational speed registering means are supplied to the influencing means (11), and the influencing means (11) are configured in such a way that, depending on the output signals ($N_p$, $N_s$) from these rotational speed registering means, a rotational speed transmission ratio ($u_N$) is determined and, by means of a comparison between the geometric transmission ratio ($u_{geo}$) and the rotational speed transmission ratio ($u_N$), the current slip ($\lambda_{B,act}$) of the wrap-around means (9) is inferred.

7. Device according to Claim 1 or 6, **characterized in that** the influencing means (11) are configured in such a way that the slip ($\lambda_B$) is regulated to a predefinable value ($\lambda_{sp}$), the current slip ($\lambda_{B,act}$) being compared with a predefinable set point ($\lambda_{B,sp}$) in order to regulate the slip.

8. A method for the operation of a wrap-around transmission of which the ratio can be adjusted, having a drive side (Prim.) and an output side (Sek.) and having wrap-around means (9) to produce a mechanical operative connection between the drive side and output side whose slip behaviour can be influenced, the slip ($\lambda_B$) of the wrap-around means (9) being influenced, **characterized in that**

- the parts ($N_{in}$) of the wrap-around means (9) leading towards the drive side (Prim.) or output side (Sek.), and the parts ($N_{out}$) of the wrap-around means (9) leading away from the drive side (Prim.) or output side (Sek.) are registered, and
- the slip ($\lambda_B$) of the wrap-around means (9) is influenced on the basis of the parts ($N_{in}$, $N_{out}$) registered.

## Revendications

1. Dispositif de mise en oeuvre d'une transmission à variation continue à courroie comportant un côté moteur (Prim.) et un côté entraîné (Sek.) et des moyens d'enveloppement (101) (courroie métallique) (109) subdivisés en différents segments (502) pour réaliser entre le côté moteur et le côté entraîné, une liaison active, mécanique, dont le comportement au glissement peut être influencé et des moyens d'influence (11) à l'aide desquels on influence le patinage ($\lambda_B$) du moyen d'enveloppement (9),
**caractérisé en ce qu'**
au moins deux unités de capteurs (S1, S2) sont prévues pour être installées au niveau de la courroie (9) et entre le côté moteur et le côté entraîné de façon que ses signaux ($N_{in}$, $N_{out}$) représentent les segments passant devant les unités de capteurs (S1, S2), l'une des unités de détection (S1, S2) étant réalisée pour que son signal ($N_{in}$) représente les segments (502) allant vers l'unité motrice ou vers l'unité entraînée, et l'autre unité de capteurs (S1, S2) étant disposée de façon que son signal ($N_{out}$) représente les segments (502) partant du côté entraîné ou le moteur et les signaux ($N_{in}$, $N_{out}$) attaquent les moyens d'influence (11) du patinage ($\lambda_B$) de la courroie (9).

2. Dispositif selon la revendication 1,
**caractérisé en ce que**
les unités de capteurs (S1, S2) sont réalisées pour détecter les variations de position relative entre les moyens d'enveloppement (9) et les unités de capteurs.

3. Dispositif selon la revendication 1,
**caractérisé en ce que**
l'étage moteur (Prim) et/ou l'étage entraîné (Sek.) comportent au moins un élément coulissant axialement (5, 8) qui présente principalement la forme d'un flasque conique.

4. Dispositif selon l'une quelconque des revendications 1 ou 3,
**caractérisé en ce que**
le moyen d'enveloppement (courroie) est constitué au moins par une courroie, de préférence une courroie à maillons coulissants (9) ou une courroie à une chaîne entre les paires de poulies représentant le côté moteur et le côté entraîné, et le patinage ($\lambda_B$) entre le moyen d'enveloppement (courroie) et les paires de poulies serrant le moyen d'enveloppement peut être influencé.

5. Dispositif selon la revendication 1,
**caractérisé en ce que**
les moyens d'influence (11) sont réalisés de façon à former une démultiplication géométrique ($u_{geo}$) dépendant de la différence ($N_{in}$ - $N_{out}$) entre les deux signaux de capteurs.

6. Dispositif selon la revendication 5,
**caractérisé en ce que**
un premier et un second moyen de détection de la vitesse de rotation (13, 14) sont prévus pour détecter la vitesse de rotation du côté moteur et/ou du côté entraîné, et les signaux de sortie ($N_p$, $N_s$) de ces détecteurs de vitesse de rotation sont appliqués aux moyens d'influence (11), et ces moyens (11) sont réalisés de façon qu'en fonction des signaux de sortie ($N_p$, $N_s$) de détecteurs de vitesse de rotation, on détermine une démultiplication de la vitesse de rotation ($u_N$), et par une comparaison entre le rapport géométrique ($u_{geo}$) et la démultiplication de vitesse de rotation ($u_N$), on en déduit le patinage actuel ($\lambda_{B,\ réel}$) de la courroie.

7. Dispositif selon l'une quelconque des revendications 1 ou 2,
**caractérisé en ce que**
les moyens d'influence (11) sont réalisés pour réguler le patinage ($\lambda_B$) sur une valeur prédéterminée ($\lambda_{B,\ cons}$), en

comparant le patinage actuel ($\lambda_{B,\ réel}$) et une valeur de consigne prédéterminée ($\lambda_{B,\ cons}$) pour réguler le patinage.

**8.** Procédé de mise en oeuvre d'une transmission à rapport variable comportant un côté moteur (Prim.) et un côté entraîné (Sek.) ainsi que des moyens d'enveloppement (9) pour établir une coopération mécanique influencée en comportement entre le côté moteur et le côté entraîné en influençant, le patinage ($\lambda_B$) des moyens d'enveloppement (9),
**caractérisé en ce qu'**

- on détecte les pièces ($N_{in}$) de la ceinture (9), aboutissant au côté moteur (Prim.) ou au côté entraîné (Sek.), et les pièces mobiles ($N_{out}$) sortant du côté moteur (Prim.) ou du côté entraîné (Sek.) du moyen d'enveloppement (9), et
- le patinage ($\lambda_B$) du moyen d'enveloppement (9) est influencé en fonction des pièces ($N_{in}$, $N_{out}$) détectées.

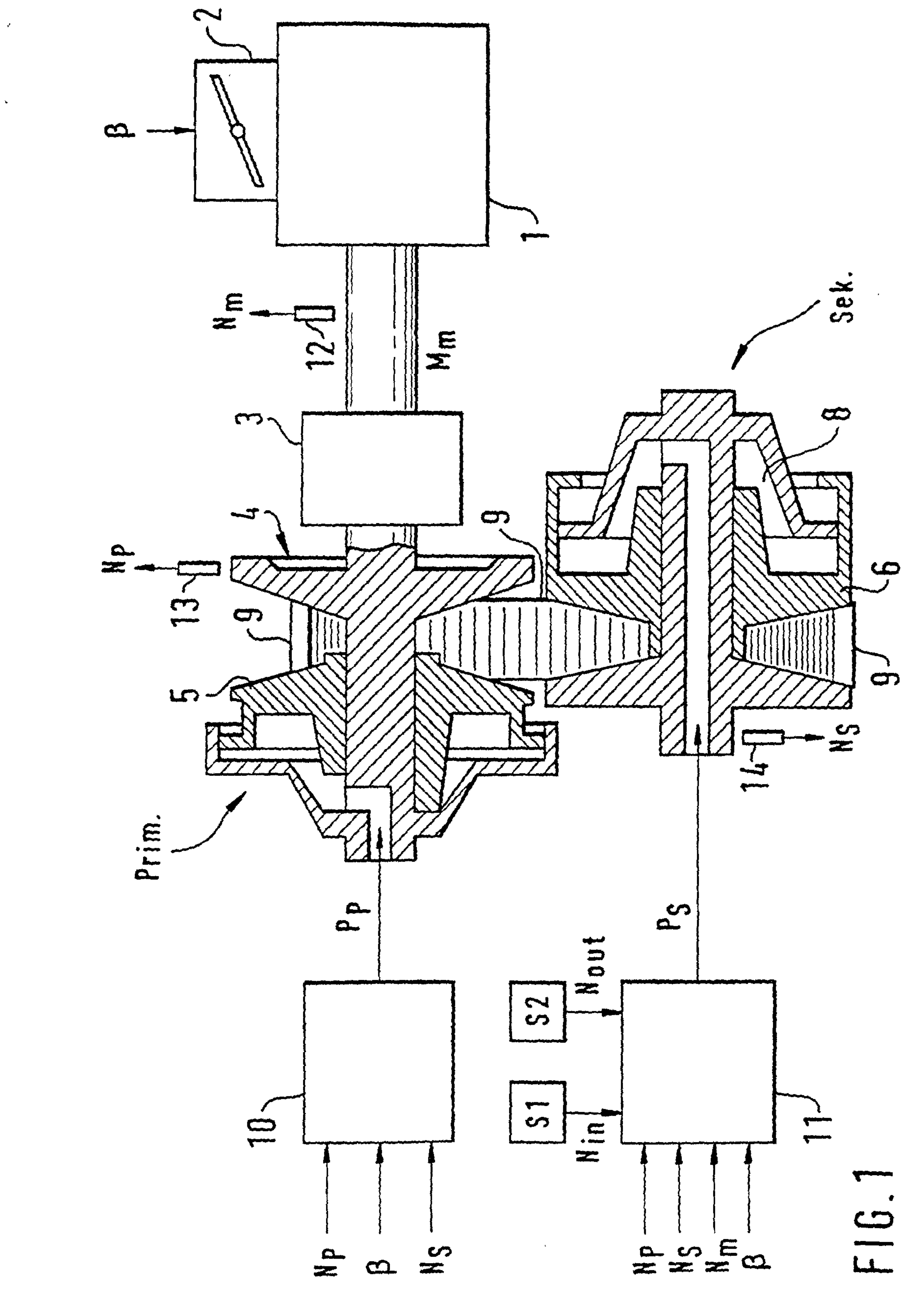
β
2
1
Nm
12
Mm
3
4
Np
13
9
5
Prim.
Pp
Sek.
8
6
9
Ns
14
Ps
10
S1
S2
Nin
Nout
11
Np
β
Ns
Np
Ns
Nm
β

FIG. 1

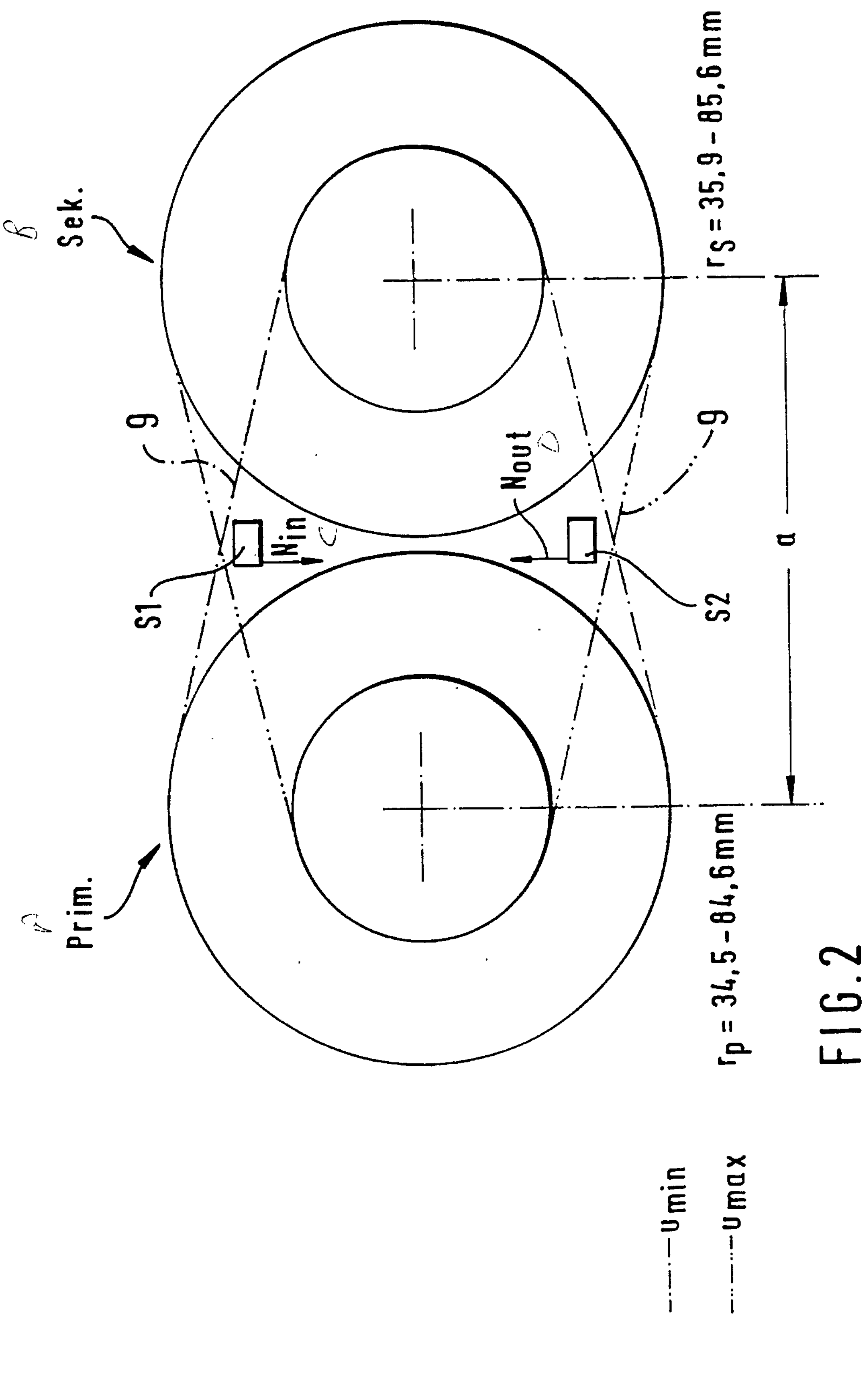


FIG. 2

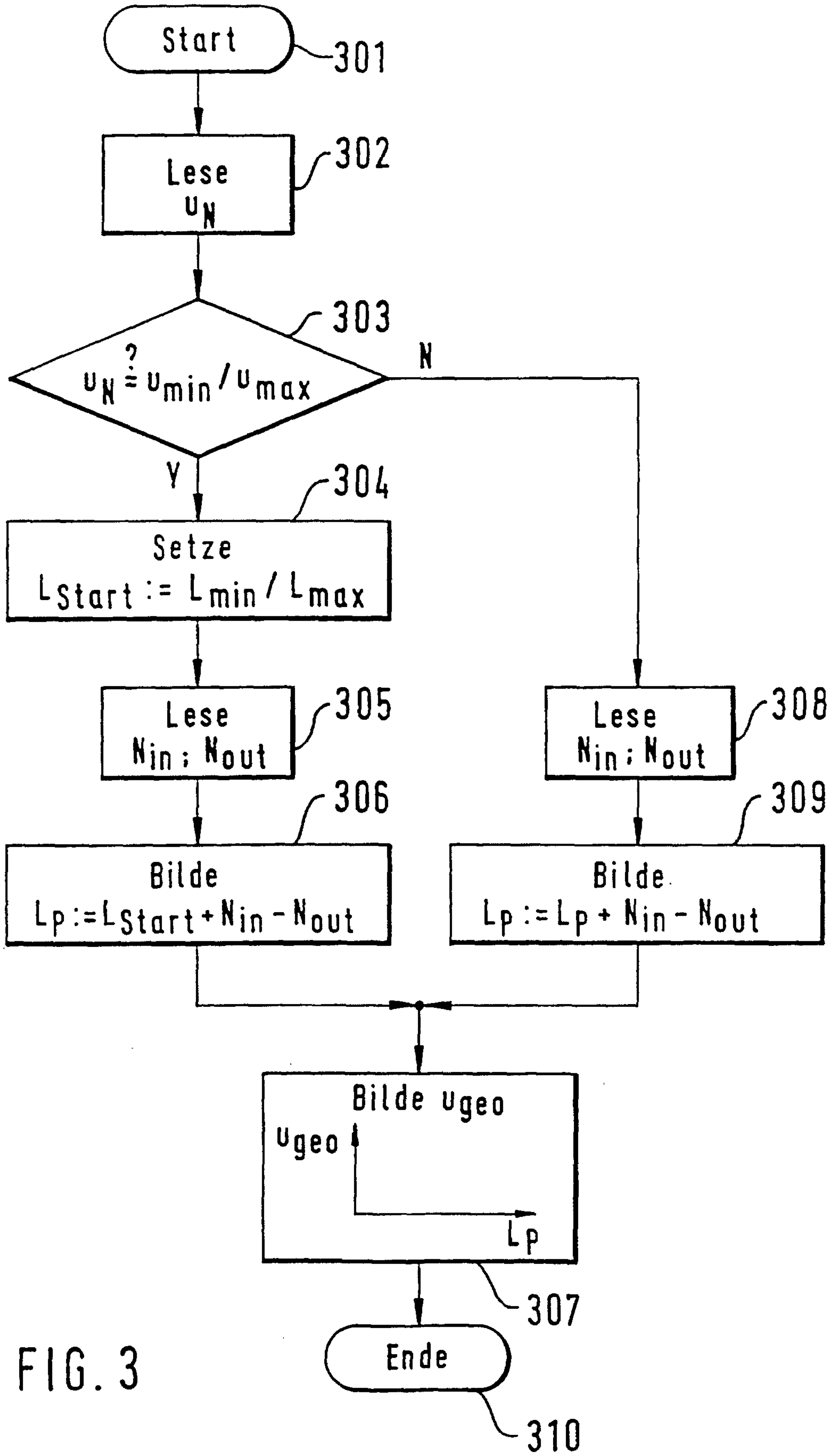
Start
301
Lese
$u_N$
302
$u_N \stackrel{?}{=} u_{min} / u_{max}$
303
N
Y
Setze
$L_{Start} := L_{min} / L_{max}$
304
Lese
$N_{in} ; N_{out}$
305
Bilde
$L_P := L_{Start} + N_{in} - N_{out}$
306
Lese
$N_{in} ; N_{out}$
308
Bilde
$L_P := L_P + N_{in} - N_{out}$
309
Bilde $u_{geo}$
$u_{geo}$
$L_P$
307
Ende
310

FIG. 3

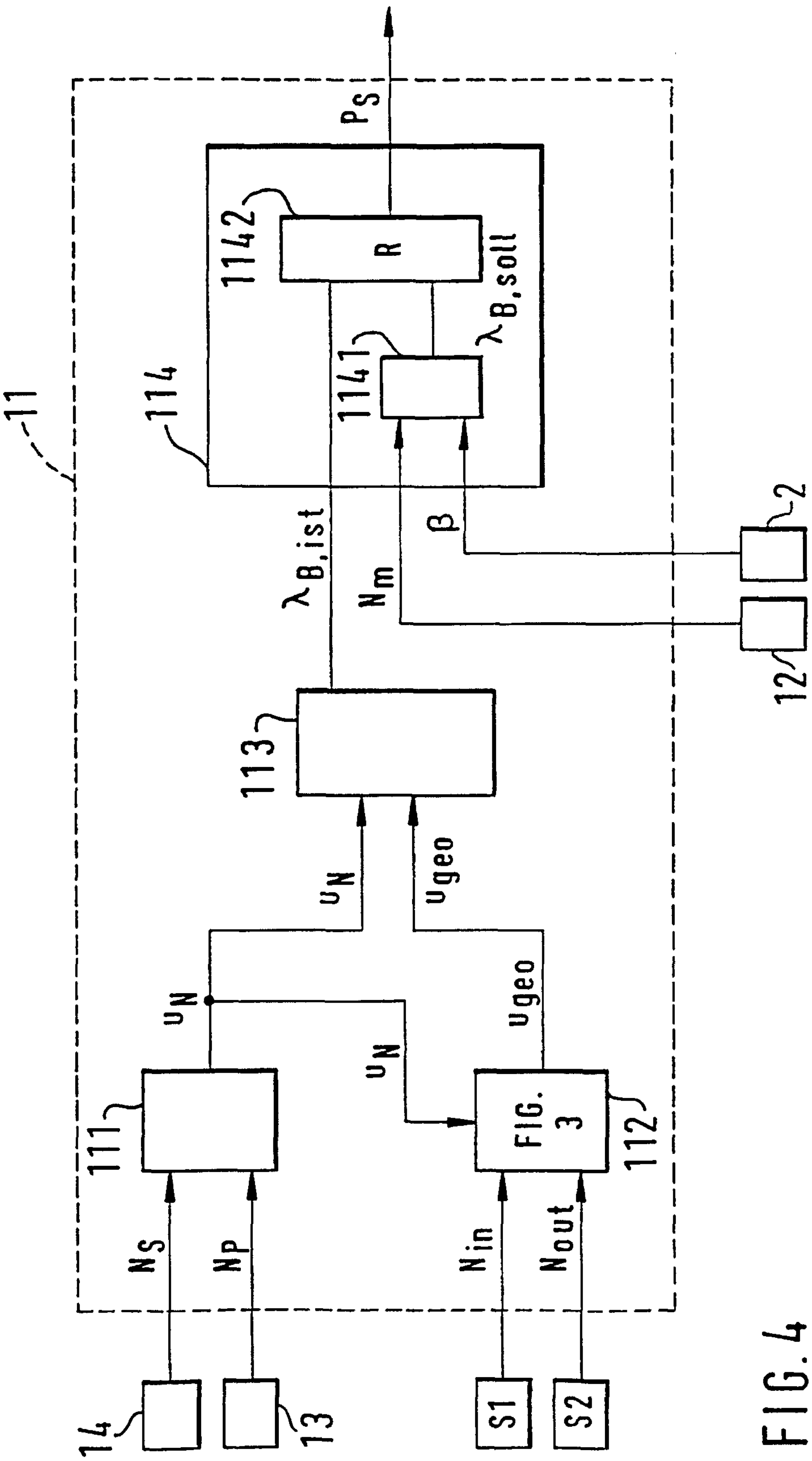
11
114
1141
1142
R
$P_S$
$\lambda_{B,soll}$
$\lambda_{B,ist}$
$N_m$
β
2
12
113
$u_N$
$u_{geo}$
111
112
FIG. 3
$N_S$
$N_P$
$N_{in}$
$N_{out}$
14
13
S1
S2

FIG. 4

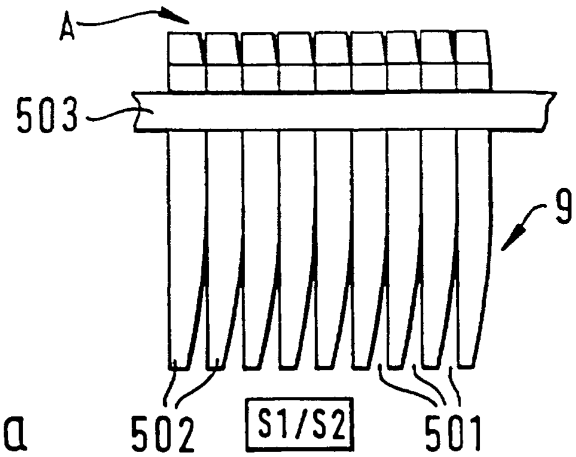


FIG.5a

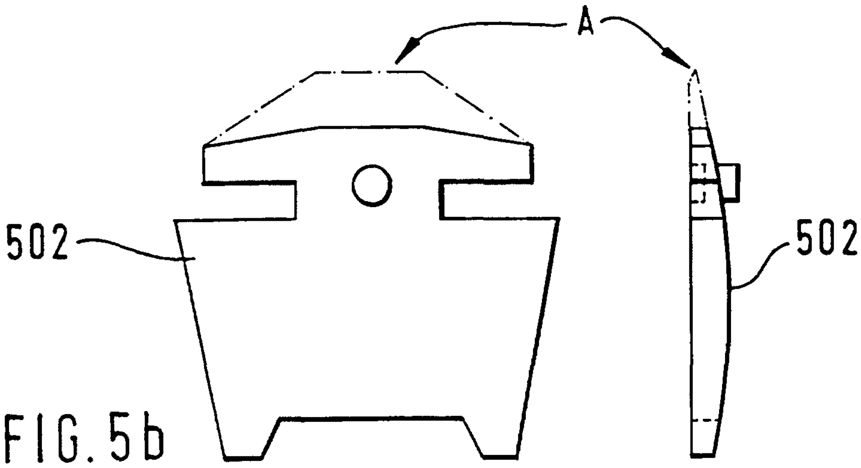


FIG.5b

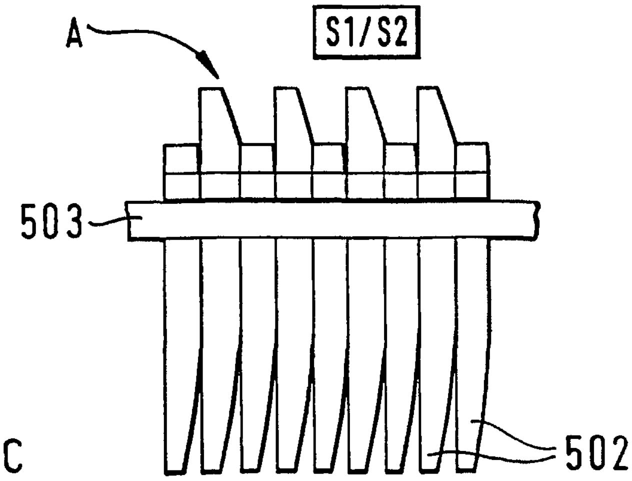


FIG.5c